# EUROPEAN PATENT SPECIFICATION

(11) **EP 0 918 078 B1**
(45) Date of publication and mention of the grant of the patent: **04.07.2007**
(21) Application number: 98905696.5
(22) Date of filing: 27.02.1998
(51) Int. Cl.: C09D 11/10, B44C 1/175, B41M 3/12, B41M 5/03

(54) **LIQUID PRESSURE TRANSFER INK, LIQUID PRESSURE TRANSFER FILM, LIQUID PRESSURE TRANSFER PRODUCT AND LIQUID PRESSURE TRANSFER METHOD**
EINE TINTE ZUM DRUCKEN MIT DEM DRUCK EINER FL|SSIGKEIT, EIN FILM ZUM DRUCKEN MIT EINER FL|SSIGKEIT, DAS PRODUKT UND DIE METHODE
ENCRE DE REPORT SOUS PRESSION LIQUIDE, FILM DE REPORT SOUS PRESSION LIQUIDE, PRODUIT DE REPORT SOUS PRESSION LIQUIDE ET PROCEDE DE REPORT SOUS PRESSION LIQUIDE

(30) Priority: 03.06.1997 JP 14485097
(43) Date of publication of application: 26.05.1999
(73) Proprietor: Taica Corporation, Minato-ku Tokyo (JP); Cubic Co., Ltd, Minato-ku Tokyo (JP)
(72) Inventor: OTAKI, Nobuyuki, Shimizu-shi Shizuoka-ken 424-0874 (JP); YAMAMOTO, Kazuhiro, Shimizu-shi Shizuoka-ken 424-0806 (JP); SUGIYAMA, Misao, Shimizu-shi Shizuoka-ken 424-0815 (JP)
(74) Representative: Seidel, Herta
(86) International application number: PCT/JP1998/000824
(87) International publication number: WO 1998/055552

(56) References cited:
- WO-A-96/00261
- JP-A- 8 238 897
- JP-A- 10 035 195
- JP-A- 10 035 196
- US-A- 3 842 051
- US-A- 4 010 057
- US-A- 4 229 239
- US-A- 5 543 219
- PATENT ABSTRACTS OF JAPAN vol. 016, no. 529 (M-1332), 29 October 1992 (1992-10-29) & JP 04 197699 A (DAINIPPON PRINTING CO LTD), 17 July 1992 (1992-07-17)

## Description

A liquid pressure pattern-transferring ink, a liquid pressure pattern-transferring film, a liquid pressure pattern-transferring article and a method of transferring a print pattern on an objective body under a liquid pressure.

This invention pertains to an ink set of liquid pressure pattern-transferring inks including at least a blue ink, a yellow ink and a red ink useful for transferring and printing appropriate print patterns such as wood grain patterns, marble patterns or other patterns by using a liquid pressure on an objective article 8a body to which the print pattern is to be transferred) having a three-dimensional surface such as a curved surface or the like. More particularly, this invention pertains to an improvement on a liquid pressure pattern-transferring ink which is suitably useful for printing the print patterns to be transferred on an outdoor objective article such as a car body, a guardrail, a fence, a gate, a bridge and so on which tends to be exposed to severe outdoor atmospheres such as sunlight, wind and rain and so on.
Furthermore, this invention pertains to a pattern-transferring film having a print pattern printed thereon by the liquid pressure pattern-transferring ink, a liquid pressure pattern-transferred article having a predetermined print pattern transferred from the pattern-transferring film by using a liquid pressure and a method of transferring a print pattern on an objective article by using the pattern-transferring film.

A method of transferring onto an objective body or article (a body to which a print pattern is to be transferred) by using a liquid pressure a print pattern on a pattern-transferring film floated on a liquid surface has been used for printing the print pattern on the objective body having a three-dimensional surface such as a curved surface and so on. The liquid to be used may be typically water, but may be a liquid other than the water if it has no trouble for the liquid pressure pattern-transferring operation.

This liquid pressure pattern-transferring method is one in which a liquid-soluble or liquid-swelling pattern-transferring film having a predetermined print pattern of no liquid solution provided thereon is floated on a surface of a liquid flowing within a transferring bath and is made swelled by the liquid and then the objective body is immersed into the liquid within the transferring bath in a manner faced to the pattern-transferring film and has the print pattern transferred from the pattern-transferring film by using a liquid pressure.

In case that there should be printed a print pattern to be transferred on such an objective body as is used in a place such as a building room or a car room where it is never exposed to an outdoor atmosphere, a printing ink is not so much required to have a weather resistance.

Of late, a curved face printing art utilizing the liquid pressure pattern-transferring process has been required to be applied not only to inner articles to be placed within a car, but also to outer articles to be placed outside the car and furthermore to outdoor building materials or outdoor structures such as guardrails, gates, bridges and so on which are to be used for a longer period.

In case that there should be printed a print pattern to be transferred on such an objective body as is exposed to severe outdoor atmospheres such as wind and rain, sunlight and so on, the printing ink is required to have a weather resistance so that the color of the transferred pattern neither changes nor fades while it is exposed to the severe outdoor atmospheres for a longer period. In case that the articles such as the guardrails, the gates, the bridges or the likes on which the print pattern is to be transferred by the liquid pressure pattern-transferring process have a life span of ten and several years to several decades, the surface of the articles on which the print pattern is transferred under the liquid pressure is required to have the same life span as the articles.

In general, the printing ink for printing the print pattern on the pattern-transferring film to be used for the liquid pressure transferring process comprises a resin serving as a binder or a vehicle, a plasticizer serving to adjust a hardness of the resin, a pigment serving to provide a color thereto and a solvent serving to solve the resin into a liquid. The print pattern to be used for being transferred under a liquid pressure may be formed by a gravure printing method by using a single or a plurality of inks among yellow, red, blue, white and black inks while they are of a primary color or of a blended color so that a variety of colors appear where dots of the primary or blended color are superposed one on another.

A printing ink of prior art includes a resin having an alkyd resin as a fundamental component and also includes a relatively inexpensive pigment having a sharpness of its color. More particularly the prior art printing ink comprises a resin ingredient including a short-oil alkyd resin of 2 to 15 weight % and a nitrocellulose of 3 to 20 weight %, a plasticizer including a dibutyl phthalate of 2 to 7 weight %, a color pigment of 5 to 40 weight % and a solvent of the residue weight %. There is used a phthalocyanine blue as a blue pigment, an anatase type titanium white as a white pigment, a carbon black as a black pigment, a permanent red as a red pigment and a disazo yellow as a yellow pigment.

Such a prior art printing ink has no problem when it is used for printing the print pattern on the surface of the indoor objective body by the liquid pressure pattern transferring method, but it is confirmed that in case the prior art printing ink is used for printing the print pattern on the surface of the outdoor objective body exposed to the severe outdoor atmospheres such as sunlight, weather and so on for a longer period, the color of the print pattern transferred on the objective body and tentatively and continuously exposed to the severe atmospheres tends to change or fade. It is also confirmed that the transferred pattern loses the original good state or is removed out of the surface of the objective body under the same tentative condition.

Imagining that the color of the transferred pattern changing or fading was caused by the properties of the pigment in itself of the printing ink, the applicant made a weather resistance test on various metal test pieces having the printing inks of various colors daubed by using a sunshine weather meter based on JIS (Japanese Industrial Standard) so as to confirm the weather resistance (weather resistance hours) of the pigments included in the prior art printing inks. As a result, it was confirmed that the colors of the phthalocyanine blue as the blue pigment and the anatase type titanium white as the white pigment neither changed nor faded even in more than 3000 hours and the color of the carbon black as the black pigment neither changed nor faded even in more than 5000 hours, but the colors of the permanent red as the red pigment and the disazo yellow as the yellow pigment changed or faded in about 1000 and 500 hours, respectively. Thus, it will be noted that the color of the pattern transferred from the print pattern on the pattern transferring film formed by using the prior art printing ink changed or faded because the pigments had a poor weather resistance.

It is presumed that it is caused by lowering the function of the resin ingredient to disperse the pigment in the printing ink when time elapses that the actual transferred pattern provided by using the prior art printing ink loses its original good state.

As previously described, the transferred pattern on the outdoor objective article (body) such as the car outer article, the building material, the structure and so on is required to have a weather resistance of ten and several years to several decades corresponding to the life span of the outdoor article. It corresponds to the weather resistance of about 5000 hours determined by the weather resistance test using the sunshine weather meter based on JIS ( Japanese Industrial Standards).

However, with the prior art printing ink used, the entire color of the transferred pattern is unbalanced due to the lower weather resistance of the red and yellow printing inks prior to the life span of the article and as a result, the color of the transferred pattern on the outdoor objective article tends to change or fade. Furthermore, the transferred pattern disadavantageously changes from the original good state so that the transferred pattern has the appearance deteriorated or is removed out of the objective article.

Such a liquid pressure pattern-transferred article sometimes has an undercoat provided before the print pattern is transferred under the liquid pressure or an overcoat provided thereafter. In this case, both of the undercoat and the overcoat are required to have the weather resistance identical to that of the transferred pattern.

Furthermore, the structure such as the guardrail or the bridge is required to have a decorative layer applied thereto. The structure has a surface area extremely larger than those of the indoor article and the outdoor article such as the car outdoor article. Thus, a larger amount of paint (varnish) or ink will be required for applying the decorative layer onto the structure, which prevents the decorative layer from being economically produced thereon.

The US-Patent 3,842,051 provides a radiation curable component available for a variety of end uses, such as inks, coating compositions, adhesives, textile and paper finishing agents and the likes and describes using vinylidene esters such as vinylidene chloride, vinylidene fluorid and vinylidene cyamide, but the vinylidene fluoride itself is not used as vehicle for inks but is used as one capolimerizable component as vehicle.

WO 96/00261 discribes the kind of pigments used for inks.

US-Patent 5,543,219 describes that a printing ink comprises vehicles and encapsulated particles, such as magnetic particles, pigments or carbon black further on it describes the usage of vinyl fluoride, but vinyl fluoride is never used for vehicles of inks.

Accordingly, it is an object of the invention to effectively transfer a print pattern under a liquid pressure onto an outdoor objective body while a transferred pattern printed on the objective body has a weather resistance of at least about 5000 hours on measurement by a sunshine weather meter based on JIS (referred to as a weather resistance of about 5000 hours hereinbelow).

It is another object of the invention to prevent a transferred pattern printed on an objective body from being deteriorated even after a long period elapses and from being removed out of the surface of the pattern transferred body so that the original good state of the transferred pattern can be maintained for a longer period.

It is further object of the invention to apply a decorative layer of higher weather resistance onto a structure such as a guardrail, a bridge and so on by using a possibly lower amount of paint or ink.

The present invention is to provide a liquid pressure pattern-transferring ink adapted to accomplish the aforementioned objects, a liquid pressure pattern-transferring film having a print pattern printed by the liquid pressure pattern-transferring ink, a liquid pressure pattern-transferred article having a transferred pattern obtained by using the liquid pressure pattern-transferring film and a method of producing the liquid pressure pattern-transferred article.

According to a first feature of the invention an ink set of liquid pressure pattern transferring inks including at least a blue ink, a yellow ink and a red ink, each of said inks whereby each of said inks are comprising a resin ingredient and a color pigment, said resin ingredient being composed of a fluoropolymer and said color pigment for said yellow ink being at least one selected from a group of an iron oxide, a titanium yellow and a lead chromate, said color pigment for said red ink being at least one selected from a group of a rouge, an iron oxide other than said rouge and a lead molybdate and said color pigment for said blue ink being at least one selected from a group of an iron blue, an ultramarine blue and a cobald aluminate.

According to a second feature of the invention a liquid pressure pattern-transferring film having a liquid soluble or liquid swelling base film and a print pattern printed on said base film, said print pattern being printed by using one or a plurality of a liquid pressure pattern transferring film having a liquid soluble or liquid swelling base film and a print pattern printed on said base film, said print pattern being printed by using one or a plurality of printing inks of a blue ink, a yellow ink, a red ink, a black ink and a white ink or an ink or inks prepared by blending said printing inks is characterized by comprising a resin ingredient and a color pigment, said resin ingredient being composed of a fluoropolymer and said color pigment for said yellow ink being at least one selected from a group of an iron oxide, a titanium yellow and a lead chromate, said color pigment for said red ink being at least one selected from a group of a rouge, an iron oxide other than said rouge and a lead molybdate, said color pigment for said blue ink being at least one selected from a group on an iron blue, an ultramarine blue and a cobalt aluminate, said color pigment for said black ink being at least one selected from a group of a carbon black and an iron oxide and said said color pigment for said white ink being at least one selected from a group of a titanium white, a white lead and a zinc white.

According to a third feature of the invention a liquid pressure pattern-transferred article formed by transferring a print pattern from a pattern-transferring film to an objective body by using a liquid pressure, said print pattern being formed by being printed by using one or a plurality of printing inks of a blue ink, a yellow ink, a red ink, a black ink and a white ink or an ink or inks prepared by blending said printing inks each is characterized by comprising a resin ingredient and a color pigment, said resin ingredient being composed of a fluoropolymer and said color pigment for said yellow ink being at least one selected from a group of an iron oxide, a titanium yellow and a lead chromate, said color pigment for said red ink being at least one selected from a group of a rouge, an iron oxide other than said rouge and a lead molybdate, said color pigment for said blue ink being at least one selected from a group of an iron blue, an ultramarine blue and a cobalt aluminate, said color pigment for said black ink being at least one selected from a group of a carbon black and an iron oxide and said color pigment for said white ink being at least one selected from a group of a titanium white, a white lead and a zinc white.

According to a fourth feature of the invention a method of transferring a print pattern from a pattern-transferring film to an objective body by using a liquid pressure, said print pattern being formed by being printed by using one or a plurality of printing inks of a blue ink, a yellow ink, a red ink, a black ink and a white ink or an ink or inks prepared by blending said printing inks each is characterized by comprising a resin ingredient and a color pigment, said resin ingredient being composed of a fluoropolymer, said color pigment for said yellow ink being at least one selected from a group of an iron oxide, a titanium yellow and a lead chromate, said color pigment for said red ink being at least one selected from a group of a rouge, an iron oxide other than said rouge and a lead molybdate, said color pigment for said blue ink being at least one selected from a group of an iron blue, an ultramarine blue and a cobalt aluminate, said color pigment for said black ink being at least one selected from a group of a carbon black and an iron oxide and said color pigment for said white ink being at least one selected from a group of a titanium white, a white lead and a zinc white and said print pattern which is dry on said pattern-transferring film being transferred under said liquid pressure after said print pattern is so treated as to be activated by an activator.

According to a fifth feature of the invention a method of transferring a print pattern from a pattern-transferring film to an objective body by using a liquid pressure, said print pattern being formed by being printed by using one or a plurality of printing inks of a blue ink, a yellow ink, a red ink, a black ink and a white ink or an ink or inks prepared by blending said printing inks each is characterized by comprising a resin ingredient and a color pigment, said resin ingredient being composed of a fluoropolymer, said color pigment for said yellow ink being at least one selected from a group of an iron oxide, a titanium yellow and a lead chromate, said color pigment for said red ink being at least one selected from a group of a rouge, an iron oxide other than said rouge and a lead molybdate, said color pigment for said blue ink being at least one selected from a group of an iron blue, an ultramarine blue and a cobalt aluminate, said color pigment for said black ink being at least one selected from a group of a carbon black and an iron oxide and said color pigment for said white ink being at least one selected from a group of a titanium white, a white lead and a zinc white and said print pattern being transferred under said liquid pressure before said print pattern is dried on said pattern-transferring film.

In the first through fifth features of the invention, the fluoropolymer resin may be preferably a vinylidene fluoride, but it may be a vinyl fluoride resin or a fluoroolefin copolymer. The color pigment for the yellow ink may be at least one selected from a group of an iron oxide, a titanium yellow and a lead chromate, the color pigment for the red ink may be at least one selected from a group of a rouge, an iron oxide and a lead molybdate, the color pigment for the blue ink may be at least one selected from a group of an iron blue, an ultramarine blue and a cobalt aluminate, the color pigment for the black ink may be at least one selected from a group of a carbon black and an iron oxide and the color pigment for the white ink may be at least one selected from a group of a titanium white, a white lead and a zinc white. The print pattern may have a design as a collective form of dots provided by a gravure printing method using one or a plurality of printing inks selected from the five color inks while they are maintained at its primary color or blended. For instance, the outdoor building material or the structure may have a designed decorative layer as a whole applied thereto by combining a ground color of the undercoat and the liquid pressure pattern-transferred layer transferred from the print pattern which is in turn printed on the film by using the printing ink of the single color. Materials for a fence and a gate may be examples of the building material while the guardrail and the bridge may be examples of the structure. It should be noted that, in the description, a term "a single color" means that it includes one of a plurality of medium colors obtained by blending a plurality of color inks as well as each color of black, white and three primary colors such as red, blue and yellow.

In the third through fifth features of the invention, a resin ingredient for one or both of the undercoat applied before the print pattern is transferred on the objective body and the overcoat applied thereafter may be preferably a fluoropolymer resin, which may be typically a vinylidene fluoride, similarly.

The fluoropolymer resin which is the resin ingredient for the printing ink is never deteriorated even though it is exposed to severe outdoor atmospheres for a long period while the inorganic color pigment which is the color pigment for the printing ink has a weather resistance of more than 5000 hours determined by a JIS sunshine weather meter.

The print pattern on the pattern transferring film used for the general liquid pressure pattern-transferring operation is obtained by forming a design as a collective form of dots on the pattern-transferring film by a gravure printing method using one or all of the five color printing inks or the blended inks obtained by blending these color printing inks. Since the liquid pressure pattern-transferring ink comprises the resin ingredient of the fluoropolymer resin and the inorganic color pigment even though it is of any color, the printing inks of all colors have the weather resistance of 5000 hours or more. Thus, the resin ingredient is never deteriorated while the color of the transferred pattern layer obtained by the single color printing ink neither changes nor fades and furthermore the color of the transferred pattern layer of the collective dots obtained by a plurality of color printing inks neither changes nor fades, which is caused due an unbalance of the weather resistance of the printing inks, if otherwise. This enables the transferred pattern layers to have the weather resistance of 5000 hours or more.

Since one or both of the overcoat and the undercoat applied on or under the transferred pattern layer include the fluoropolymer resin, their weather resistance is improved and enables to provide a baking finish therefor and in addition thereto the three layers of the undercoat, the transferred pattern layer and the overcoat have an adhesive property improved by the fluoropolymer resin included in the transferred pattern layer.

### BRIEF DESCRIPTION OF THE DRAWINGS

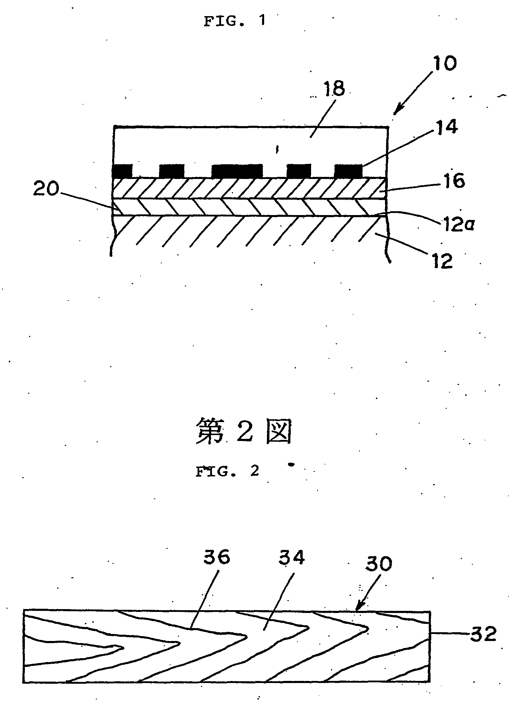

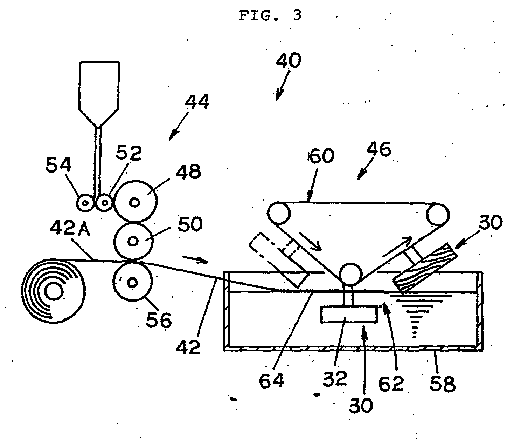

Fig. 1 is an enlarged cross sectional view of an example of a liquid pressure pattern-transferred article of the invention, Fig. 2 is a top view of another example of a liquid pressure pattern-transferred article and Fig. 3 is a schematic diagram illustrating a method of producing the liquid pressure pattern-transferred article.

### BEST MODE FOR EMBODYING THE INVENTION

A fundamental method of transferring a print pattern under a liquid pressure by using a liquid pressure pattern-transferring ink of the invention is substantially identical to the prior art method as illustrated and described in United States Patent Nos. 4,010,057 and 4,436,571, but a brief description of the method as described in the United States Patent No. 4,436,571 will be made hereinjustbelow.

A pattern-transferring film to be used for the liquid pressure pattern transferring method can be produced by printing a print pattern such as a wood grain pattern or a marble pattern on a liquid soluble or liquid swelling base film of polyvinyl alcohol resin by a gravure printing method or other method using the printing ink of the invention. This pattern-transferring film is stored as a pattern-transferring film supply by being wound into a roll or making a bundle of sheets after dried.

In case the print pattern on the pattern-transferring film is transferred onto an objective body, a series of pattern-transferring film or every sheet of pattern-transferring film is drawn out from the pattern-transferring film supply before it is supplied into a transferring bath and passes through a coating means such as a roll coater where it is treated by an activator which is coated onto the print pattern on the pattern-transferring film.

The activator to be used for the treatment serves to restore the printing ink from the dry state to the swelling state so that the print pattern has a state of adhesive property as if it is just after it is printed. In case the objective body has a primary coat or undercoat, the activator preferably includes such a component as never rapidly dissolves a layer of the primer coat and has an affinity with a solvent of the primer coat.

The pattern-transferring film having the print pattern thus treated by the activator is supplied onto a liquid surface within the transferring bath by a suitable film supplying means while the print pattern is upwardly faced. The base film of the pattern-transferring film is swelled and softened by a liquid within the transferring bath which may be typically water. Meanwhile, the print pattern on the pattern-transferring film is restored to the state of being fully swelled so as to be able to be transferred because it is treated by the activator before it reaches a transferring area within the transferring bath.

A conveying means serves to convey the objective body so as to partially or entirely immerse it into the liquid together with the transferring film while engaging the transferring film which is located at the transferring area within the transferring bath. Thus, the print pattern is transferred and closely adhered to a surface of the objective body under a liquid pressure which occurs when the objective body is immersed into the liquid. The print pattern can be closely adhered to and along the curved or complicated rough surface of the objective body in accordance with the extensibility of the ink.

The conveying means to convey the objective body withdraws up the objective body onto which the print pattern is attached out of the liquid surface and then conveys the resultant pattern transferred body to a surface treatment room. Within the surface treatment room is showered a hot water onto the pattern transferred body to wash out the remaining portion of the base film of the transferring film. Thereafter, within the surface treatment room is blown a hot air onto the pattern transferred body so that the solvent included in the ink and the activator is evaporated. An over coat may be provided onto the pattern transferred body, if necessary.

The objective body should be conveyed in such a pose that an air never enters between the objective body and the transferring film when it is immersed into the liquid within the transferring bath. The liquid within the transferring bath has a flow of given velocity so that the transferring film is moved to the transferring area at the given velocity and the objective body is immersed into the liquid at the velocity corresponding to that of the transferring film.

As described in the U.S. Patent No. 4,010,057 specification, the pattern transferring film may be used for transferring the print pattern under a liquid pressure by being supplied to the transferring bath before being made dry after the print pattern is printed. In this case, treating the transferring film by the activator is not required. As disclosed in the U.S. patent specification, the pattern-transferring film may be fed to the step of transferring the print pattern after the film is cut into ones of predetermined length, but may be fed thereto in a serial form without being cut. In the latter case, as the pattern transferred body is drawn up out of the water after the print pattern is transferred, the succeeding pattern-transferring film in the swelled state will be forcefully cut away from the pattern transferred body.

A fundamental feature of the pattern-transferring ink of the invention is to comprise a resin ingredient composed of a fluoropolymer resin and a color pigment which is an inorganic pigment in spite of its color. The pattern-transferring ink may include a proper additive such as a plasticizer or other and a solvent to dissolve the ink ingredients in addition thereto.

The fluoropolymer resin which is the resin ingredient may be preferably a vinylidene fluoride, but it may be a vinyl fluoride resin or a fluoroolefin copolymer.

The ink of each color may include the following particular inorganic color pigment described hereinbelow. The yellow ink has at least one selected from a group of an iron oxide, a titanium yellow and a lead chromate, the red ink has at least one selected from a group of a rouge, an iron oxide and a lead molybdate, the blue ink has at least one selected from a group of an iron blue, an ultramarine blue and a cobalt aluminate. The black ink has at least one selected from a group of a carbon black and an iron oxide and the white ink has at least one selected from a group of a titanium white, a white lead and a zinc white. These color pigments may further have a metal powder pigment such as an aluminum powder, a pearl mica, a brass and so on added thereto in order to provide a different decorative effect thereto.

The plasticizer may be a dibutyl phthalate, a dioctyl phthalate or other proper component.

The solvent may be a toluene, a xylene, an ethyl acetate, an acetone or the like.

These ink ingredients may have a content properly set in consideration of hardness or softness, hue, coloring and concentration and so on.

The print pattern on the pattern-transferring film is obtained by forming a design as a collective form of dots by a gravure printing method using one or all of the five color printing inks as they are a primary color or blended with each other.

For instance, although there are generally used inks of at least three primary colors of blue, yellow and red or inks prepared by blending them with each other in order to form by the gravure printing method a print pattern on a base film to be transferred on the objective body, there may be additionally used a black ink for the print pattern in order to express the original black which cannot appear with these three primary colors and also a white ink therefor in order to express the white color which cannot appear with the blend of the three primary colors.

As previously described, an outdoor article which is to be used for a longer period while it is exposed to the severe outdoor atmospheres can be given no weather resistance corresponding to the life span of itself unless all the printing inks to be used for printing the print pattern have a predetermined weather resistance because the transferred pattern is unbalanced in its color tone.

It will be understood that since all the printing inks having the color pigments of the aforementioned colors have the weather resistance of 5000 hours or more determined by the sunshine weather meter based on JIS, the print pattern printed by these inks and transferred onto the objective body has the weather resistance of ten and several years through several decades in case of both of the single color and the combination of the optional colors.

Some examples of a sample obtained by using the liquid pressure pattern-transferring ink of the invention will be described hereinjustbelow. In these examples, there is separately formed the sample of every color having a transferred layer obtained by transferring on an aluminum test piece under a water pressure an ink layer on a transferring film which is in turn provided by daubing one of inks of three primer colors, white and black on a base film.

Table 1 shows the specific ratio of ingredients of the printing ink used for obtaining the sample according to the example of the invention while Table 2 shows the specific ratio of the ingredients of the printing ink used for obtaining the prior art sample. The inorganic pigments in the Table 1 were selected from the groups of the aforementioned specific inorganic pigments for every color. The organic or inorganic pigments in the Table 2 were a diazo yellow for the yellow pigment, a permanent red for the red pigment and a phthalocyanine blue for the blue pigment( all of which were the organic pigment) and an anatase type titanium white for the white pigment and a carbon black for the black pigment (all of which were the inorganic pigments).

**Table 1**

| Ingredients of ink | (Weight %) |
|---|---|
| Vinylidene fluoride (resin ingredient) | 5 to 20 |
| Inorganic pigments (all colors) | 12 to 40 |
| Dioctyl phthalate (plasticizer) | 4 to 7 |
| Toluene (solvent) | residue |

**Table 2**

| Ingredients of ink | (Weight %) |
|---|---|
| Resin ingredient | |
| Short-oil alkyd resin | 2 to 15 |
| Nitrocellulose | 3 to 20 |
| Organic and inorganic pigments | 5 to 40 |
| Dioctyl phthalate (plasiticizer) | 2 to 7 |
| Toluene (solvent) | residue |

A weather test was made by a sunshine weather meter based on JIS on these samples. This weather test was conducted by comparing two kinds of the sample visually or by a color difference meter and confirming when the samples change or fade in their color. One kind of the sample was a tested sample which was obtained by continuously irradiating a light from a xenon lamp to the sample during every 25 minutes of one cycle and showering a water during the first 5 minutes among the 25 minutes of one cycle, which was repeated for various test times. Another kind of the sample was a non-tested sample which had the transferred layer, which was obtained by transferring under a water pressure having the same colors as the aforementioned kind of the sample, but which was given no weather test. As a result, it was confirmed that the samples according to the examples of the invention neither changed nor faded in their colors and had no transferred ink layer removed out of the test pieces, but that, in the samples according to the prior art, the yellow transferred layer began to change and fade in its color in about 500 hours while the red transferred layer began to change and fade in its color in about 1000 hours and that both of them were observed to be removed out of the test pieces.

Accordingly, it will be presumed that the layers of the transferred pattern of the actual liquid pressure pattern-transferred article produced by using the pattern-transferring ink according to the invention will neither change nor fade in their colors and will be never removed out of the objective body even though they are either of a single color dot collective form or of a plural color dot collective form even after ten and several years through several decades elapse while they are exposed to the severe outdoor atmospheres.

An example of a pattern-transferred article of the invention is shown in Fig. 1. This pattern-transferred article 10 may be a metal product made of aluminum, stainless steel and so on, an inorganic product made of ceramics or the like or a plastic product made of various plastics, but in the illustrated embodiment, the article is shown to be an outdoor building material such as a gate or the like. An undercoat 16 is provided on an underside of a layer 14 of a transferred pattern while an overcoat 18 is provided on an upper face of the transferred pattern layer 14. The undercoat 16 may be provided through a primer coat 20 on a surface 12a of a body 12 of the liquid pressure pattern transferred article 10.

As previously described, the transferred pattern layer 14 is formed by transferring by the aforementioned liquid pressure transferring method a print pattern from a pattern-transferring film having the print pattern printed by using a pattern-transferring ink or inks of a single color or plural colors including a fluoropolymer resin and an inorganic pigment. The print pattern on the pattern-transferring film is fed to the liquid pressure pattern transferring step while it is activated by a predetermined activator.

In case the undercoat 16 and the overcoat 18 are applied to the article, these coats may be preferably formed by coating a paint including a resin ingredient of a fluoropolymer resin. The undercoat and/or the overcoat may be formed by baking them at a baking temperature of 220 °C or more in order to obtain its hard surface. The fluoropolymer resin may be a vinylidene fluoride as a preferable example, but may be a vinyl fluoride resin or a fluoroolefin copolymer, which is identical to that of the resin ingredient for the ink.

As the paint for the undercoat and the overcoat which is used in combination of the transferred pattern of the pattern-transferred article having the predetermined weather resistance includes the resin ingredient of the fluoropolymer resin, the coats may be able to be provided by baking so as to obtain its harder good surface. In addition thereto, since the transferred pattern between the coats has the layer of the ink including the fluoropolymer resin in the same manner, these three layers can have a higher adhesion to each other. Thus, it will be noted that the property of the pattern transferred article can be more improved together with the weather resistance of the fluoropolymer resin itself. As previously described, since the transferred pattern has the weather resistance of 5000 hours and more determined by the JIS sunshine weather meter, the life span of the thus obtained pattern-transferred article can be maintained at ten and several years through several decades.

Another embodiment of the pattern-transferred article and the liquid pressure pattern-transferring method will be described with reference to Figs. 2 and 3 hereinafter. Different from the method of producing the liquid pressure pattern-transferred article of the aforementioned embodiment, in this embodiment is used a pattern-transferring film having a print pattern printed by using a pattern-transferring ink of a single color and the transferring operation is made by feeding the pattern-transferring film to the transferring step before it is dried in the same manner as described in the United States Patent No. 4,010,.057 specification.

In Fig. 2 is shown a guardrail 30 as an example of the liquid pressure pattern-transferred article having the transferred pattern of the single color. The guardrail 30 has an undercoat 34 of brown color which is applied to a surface of a body of the guardrail made of metal such as steel so as to provide a ground color thereto and a transferred layer 36 of black wood grain applied on the undercoat 34 by the liquid pressure pattern-transferring method of the invention. A transparent topcoat may be provided on both of the undercoat 34 of the ground color and the transferred layer 36 of wood grain all over them, if necessary.

The wood grain pattern transferred layer 36 can be applied by using the liquid pressure pattern-transferring ink as previously described by means of the liquid pressure pattern-transferring method which will be described with reference to Fig. 3 hereinbelow.

The undercoat 34 and the topcoat may be preferably formed by using a paint including a resin ingredient of a fluoropolymer resin such as a vinylidene fluoride in the same manner as described with reference to Fig. 1.

In this manner, with the brown undercoat 34 provided on the surface of the body of the guardrail 30 so as to provide the ground color thereto and with the liquid pressure transferred layer 36 having only the single black color wood grain pattern provided on the undercoat 34, the combination of the undercoat 34 and the liquid pressure transferred layer 36 will provide to the guardrail 30 a decorative design layer having an appearance which is as if it is a genuine wood grain pattern when it is observed from far away. This allows the amount of the transferring ink used for the transferred layer 36 to be considerably lower than that in case the wood grain pattern is transferred to the surface of the guardrail body 32 all over it and therefore enables the guardrail having a vessel pattern to be inexpensively provided.

With such guardrails laid along roads, rivers and so on in mountain districts, rural districts or cities, for instance, they serve to economically provide a good view thereto because they give an appearance as if wooden guard rails are laid. Since the undercoat 34 and the liquid pressure transferred layer 36 have the higher weather resistance, the guardrails 30 can have a longer life span provided thereto.

Although, in the embodiment of Fig. 2, the liquid pressure pattern-transferred article is the guardrail, it may be an outdoor building material such as a fence, a gate and so on or the like or a structure such as a bridge and so on.

In the illustrated embodiment, although the wood grain pattern was printed by the black ink, it may be printed by a dark brown ink prepared by properly blending inks of various colors.

Now, there will be described a method of applying the liquid pressure pattern-transferred layer 36 to the guardrail 30 of Fig. 2 by using a transferring equipment 40 of Fig. 3. The transferring equipment 40 comprises a pattern printing section 44 to print a wood grain pattern on a base film of a pattern-transferring film 42 and a liquid pressure pattern-transferring section 46 to form the liquid pressure pattern-transferred layer 36 by transferring the wood grain pattern to the guardrail 30 while the thus obtained pattern-transferring film 42 is fed thereto before the ink of the wood gain pattern thereon is dried.

The pattern printing section 44 may comprise a block roller 48 to make an appearance of the wood grain pattern obtained by a photomechanical process and a printing roller 50 which may be made of a polyurethane to engage the block roller 48 so that the wood grain pattern is transferred from the block roller 48 to the printing roller 50. A liquid pressure pattern-transferring ink is fed to the block roller 48 from ink rollers 52 and 54 which serve to supply the ink. Between the printing roller 50 and a pressurizing roller 56 passes the base film 42A of the transferring film 42 to which the wood grain pattern transferred from the block roller 48 is printed. Thus, it will be understood that the pattern printing section 44 is a kind of an offset printing system, but it may be of a gravure printing system. The ink to be used for printing the wood grain pattern is a black ink including a fluoropolymer resin ingredient and an inorganic pigment as described with reference to Fig. 2, and more particularly, it may be the black ink having the resin ingredient of the vinylidene fluoride and the black inorganic pigment of the carbon black, for instance. In case the wood grain pattern is to be printed by the dark brown ink, the printing ink may be obtained by blending the red, the yellow and the black at an appropriate ratio, for instance. It should be noted that these color inks should be one including a fluoropolymer resin such as a vinylidene fluoride and so on and a particular inorganic color pigment.

In the illustrated embodiment, the liquid pressure transferring section 46 is illustrated to be of a conveyor type, in which a plurality of the guardrails 30 are sequentially fed to the transferring area. This may be also effectively utilized in case the guardrails 30 are relatively shorter. In case the pattern should be transferred to the relatively longer guardrails 30 under a liquid pressure, there may be preferably employed a transferring operation of a batch system in which each of the guardrails 30 is immersed into a transferring bath having a stationary water in a gradually inclined manner from one end to the other end thereof.

The conveyor type liquid pressure transferring section 46 may comprise a transferring bath 58 through which a water is fed and an objective body conveyor 60 to sequentially supply the body 32 of the steel guardrails 30 to the transferring bath 58. Similarly, an undercoat is previously applied to the surface of the guardrail body 32 by using a brown paint having a resin ingredient of fluoropolymer resin as previously described with reference to Fig. 2.

As shown in Fig. 3, the liquid pressure transferring film 42 formed by printing the wood grain pattern at the pattern printing section 44 is supplied to the water surface within the transferring bath 58 while the wood grain pattern is upwardly faced after the pattern is printed, but before it is dried and fed toward a transferring area 62 within the transferring bath 58. The transferring film 42 is moved by such a suitable means as gives a flow to the water within the transferring bath 58. Since the ink layer of the transferring film 42 is at the state of being swelled, it can be continuously fed to the transferring step without treating it by an activator.

As the transferring film 42 is supplied to the water surface 64, the base film 42A thereof is swelled by the water, but since the ink layer of wood grain pattern thereon is insoluble to the water, it is fed to the transferring area while it is slightly expanded in a longitudinal direction and in a lateral direction in accordance with the swelling of the base film 42A.

As shown in Fig. 3, the objective body conveyor 60 serves to sequentially immerse into the water within the transferring bath 58 at the transferring area 62 the guardrail bodies 32 having the brown undercoat previously applied thereto while the transferring film 42 is positioned under the surface of the guardrail bodies 32 and thereafter draw up the guardrail bodies 30 out of the water. By utilizing a water pressure occurring when the guardrail bodies 32 are immersed into the water, the ink layer of wood gain pattern on the transferring film 42 is closely adhered to the surface of the guardrail bodies 32 so that the wood grain pattern is transferred onto the surface of the guardrail bodies 32 to form the layer 14 of the transferred pattern (see Fig. 1). Out of the guardrail bodies 30 onto which the wood grain pattern is transferred and which is drawn up out of the water is removed the portion of the base film remaining on the guardrail bodies 30 by any suitable film removing means and then the topcoat may be applied thereto, if required. Thus, the steel guardrail 30 having the wood grain pattern applied as shown in Fig. 2 and having a good weather resistance can be produced.

In this process, following the printing step in which the print pattern (wood grain pattern) is printed on the transferring film 42, the print pattern is transferred on the guardrail bodies 32. This serial system of operation may be advantageously applied to a case in which the print pattern (wood grain pattern) of a single layer is printed on the transferring film. Of course, the serial system of operation may be applied to a case in which the print pattern of multi-color or multi-layer is printed on the transferring film, but since the multi-color printing and the multi-layer printing are somewhat harder than the single layer printing, in case there is used the transferring film having the print pattern obtained by the multi-color printing or the multi-layer printing, there is preferably employed a system in which the step of printing the print pattern and the step of transferring the print pattern are separately conducted as disclosed in the United States Patent No. 4,436,571 specification.

### UTILIZABILITY OF INDUSTRIES

In this manner, the invention is suitably applied for printing by a liquid pressure pattern-transferring method a pattern on a surface of an outdoor article or an outdoor structure exposed to severe outdoor atmospheres for ten and several years through several decades which are building materials such as guardrails, gates or the likes and structures such as bridges or the likes

Furthermore, this invention is adapted to provide a liquid pressure transferring article having a transferred pattern provided through an undercoat on the body of the article and having an overcoat applied if required in which the transferred pattern has a weather resistance maintained at a life span of the article itself. Since the layer of the transferred pattern and the undercoat and/or the overcoat are closely adhered to each other, it may be applied to the outdoor article or the outdoor structure similarly.

Since the invention may apply the transferred layer such as wood grain pattern to a large-sized outdoor structure by combining an undercoat of ground color having a weather resistance with a transferred pattern of a printing ink having a weather resistance of ten and several years through several decades, a wooden-like structure can be economically produced while an amount of an expensive ink to be used is as low as possible.

## Claims

1. An ink set of liquid pressure pattern transferring inks including at least a blue ink, a yellow ink and a red ink, each of said inks **characterized by** comprising a resin ingredient and a color pigment, said resin ingredient being composed of a fluoropolymer and said color pigment for said yellow ink being at least one selected from a group of an iron oxide, a titanium yellow and a lead chromate, said color pigment for said red ink being at least one selected from a group of a rouge, an iron oxide other than said rouge and a lead molybdate and said color pigment for said blue ink being at least one selected from a group of an iron blue, an ultramarine blue and a cobald aluminate.

2. An ink set of liquid pressure pattern transferring inks as set forth in claim 1, **characterized in that** said fluoropolymer is vinylidene fluoride polymer.

3. An ink set of liquid pressure pattern transferring inks as set forth in claim 1 or 2 and further including one or both of a white ink and a black ink **characterized in that** said color pigment for said black ink is at least one selected from a group of a carbon black and an iron oxide and said color pigment for said white ink is at least one selected from a group of a titanium white, a white lead and a zinc white.

4. A liquid pressure pattern transferring film having a liquid soluble or liquid swelling base film and a print pattern printed on said base film, said print pattern being printed by using one or a plurality of printing inks of a blue ink, a yellow ink, a red ink, a black ink and a white ink or an ink or inks prepared by blending said printing inks each **characterized by** comprising a resin ingredient and a color pigment, said resin ingredient being composed of a fluoropolymer and said color pigment for said yellow ink being at least one selected from a group of an iron oxide, a titanium yellow and a lead chromate, said color pigment for said red ink being at least one selected from a group of a rouge, an iron oxide other than said rouge and a lead molybdate, said color pigment for said blue ink being at least one selected from a group on an iron blue, an ultramarine blue and a cobalt aluminate, said color pigment for said black ink being at least one selected from a group of a carbon black and an iron oxide and said said color pigment for said white ink being at least one selected from a group of a titanium white, a white lead and a zinc white.

5. A liquid pressure pattern transferring film as set forth in claim 4 **characterized in that** said fluoropolymer is vinylidene fluoride polymer.

6. A liquid pressure pattern transferred article formed by transferring a print pattern from a pattern-transferring film onto an objective body by using a liquid pressure, said print pattern being formed by being printed by using one or a plurality of printing inks of a blue ink, a yellow ink, a red ink, a black ink and a white ink or an ink or inks prepared by blending said printing inks each **characterized by** comprising a resin ingredient and a color pigment, said resin ingredient being composed of a fluoropolymer and said color pigment for said yellow ink being at least one selected from a group of an iron oxide, a titanium yellow and a lead chromate, said color pigment for said red ink being at least one selected from a group of a rouge, an iron oxide other than said rouge and a lead molybdate, said color pigment for said blue ink being at least one selected from a group of an iron blue, an ultramarine blue and a cobalt aluminate, said color pigment for said black ink being at least one selected from a group of a carbon black and an iron oxide and said color pigment for said white ink being at least one selected from a group of a titanium white, a white lead and a zinc white.

7. A liquid pressure pattern transferred article as set forth in claim 6 **characterized in that** said fluoropolymer is vinylidene fluoride polymer.

8. A liquid pressure pattern transferred article as set forth in claim 6 or 7 and **characterized in that** said objective body has one or both of an undercoat provided under said liquid pressure pattern-transferred layer and a topcoat provided on said liquid pressure pattern-transferred layer, said undercoat and said topcoat being formed by a paint having a resin ingredient of fluoropolymer .

9. A liquid pressure pattern transferred article as set forth in claim 8 **characterized by** having an undercoat provided on a suface of an objective body and a liquid pressure pattern-transferred layer formed by transferring a print pattern on said undercoat from pattern-transferring film by using a liquid pressure, said undercoat formed by a paint having a resin ingredient of a fluoropolymer resin to provide a ground color to said objective body, said liquid pressure pattern-transferred layer having a single color pattern so as to provide a predetermined decorative surface in combination with said ground color, said single color pattern being formed by a liquid pressure pattern-transferring ink comprising a resin ingredient of a fluoropolymer resin and an inorganic pigment, said color pigment for a yellow ink being at least one selected from a group of an iron oxide, a titanium yellow and a lead chromate, said color pigment for a red ink being at least one selected from a group of a rouge, an iron oxide other than said rouge and a lead molybdate, said color pigment for a blue ink being at least one selected from a group of an iron blue, an ultramarine blue and a cobalt aluminate, said color pigment for a black ink being at least one selected from a group of a carbon black and an iron oxide and said color pigment for a white ink being at least one selected from a group of a titanium white, a white lead and a zinc white.

10. A liquid pressure pattern transferred article as set forth in claim 9 **characterized in that**, said fluoropolymer is vinylidene fluoride polymer .

11. A method of transferring a print pattern from a pattern-transferring film to an objective body by using a liquid pressure, said print pattern being formed by being printed by using one or a plurality of printing inks of a blue ink, a yellow ink, a red ink, a black ink and a white ink or an ink or inks prepared by blending said printing inks each **characterized by** comprising a resin ingredient and a color pigment, said resin ingredient being composed of a fluoropolymer, said color pigment for said yellow ink being at least one selected from a group of an iron oxide, a titanium yellow and a lead chromate, said color pigment for said red ink being at least one selected from a group of a rouge, an iron oxide other than said rouge and a lead molybdate, said color pigment for said blue ink being at least one selected from a group of an iron blue, an ultramarine blue and a cobalt aluminate, said color pigment for said black ink being at least one selected from a group of a carbon black and an iron oxide and said color pigment for said white ink being at least one selected from a group of a titanium white, a white lead and a zinc white and said print pattern which is dry on said pattern-transferring film being transferred under said liquid pressure after said print pattern is so treated as to be activated by an activator.

12. A method as set forth in claim 11 **characterized in that**, said fluoropolymer is vinylidene fluoride polymer.

13. A method of transferring a print pattern from a pattern-transferring film to an objective body by using a liquid pressure, said print pattern being formed by being printed by using one or a plurality of printing inks of a blue ink, a yellow ink, a red ink, a black ink and a white ink or an ink or inks prepared by blending said printing inks each **characterized by** comprising a resin ingredient and a color pigment, said resin ingredient being composed of a fluoropolymer, said color pigment for said yellow ink being at least one selected from a group of an iron oxide, a titanium yellow and a lead chromate, said color pigment for said red ink being at least one selected from a group of a rouge, an iron oxide other than said rouge and a lead molybdate, said color pigment for said blue ink being at least one selected from a group of an iron blue, an ultramarine blue and a cobalt aluminate, said color pigment for said black ink being at least one selected from a group of a carbon black and an iron oxide and said color pigment for said white ink being at least one selected from a group of a titanium white, a white lead and a zinc white and said print pattern being transferred under said liquid pressure before said print pattern is dried on said pattern-transferring film.

14. A method as set forth in claim 13, **characterized in that**, said fluoropolymer is vinylidene fluoride polymer.

15. A method of transferring a print pattern onto an objective body as set forth in claim 11 and/or claim 13 **characterized by** the steps of forming an undercoat on said objective body by a paint having a resin ingredient of a fluoropolymer resin to provide a ground color thereto and forming a liquid pressure pattern transferred layer of a single color pattern by transferring a print pattern of said single color pattern on said undercoat from a pattern-transferring film by using a liquid pressure so as to provide a predetermined decorative surface to said objective body in combination with said ground color.

16. A method as set forth in claim 15, **characterized in that**, said fluoropolymer is vinylidene fluoride polymer.

## Patentansprüche

1. Tintensatz mit Tinten zum Drucken unter Flüssigkeitsdruck mit mindestens einer blauen Tinte, einer gelben Tinte und einer roten Tinte, wobei jede der Tinten d a-durch **gekennzeichnet** ist, dass sie einen Harzbestandteil und ein Farbpigment erhält, wobei der Harzbestandteil aus einem Fluorpolymer besteht und das Farbpigment für die gelbe Tinte mindestens ein Pigment, ausgewählt aus einer Gruppe, die ein Eisenoxyd, ein Titangelb und ein Bleichromat umfasst, das Farbpigment für die rote Tinte mindestens ein Pigment aus einer Gruppe, die ein Polierrot, ein Eisenoxyd, das sich von dem Polierrot unterscheidet und ein Bleimolybdat umfasst und das Farbpigment für die blaue Tinte mindestens ein Pigment, aus einer Gruppe, die ein Eisenblau, ein Ultramarinblau und ein Kobaltblau umfasst, enthält.

2. Tintensatz nach Anspruch 1, **dadurch gekennzeichnet, dass** das Fluorpolymer Vinylidenfluoridpolymer ist.

3. Tintensatz nach Anspruch 1 oder 2, der noch eine weiße Tinte oder eine schwarze Tinte oder sowohl eine weiße als auch eine schwarze Tinte enthält, **dadurch gekennzeichnet, dass** das Farbpigment für die schwarze Tinte mindestens ein Pigment aus einer Gruppe, umfassend ein Rußschwarz und ein Eisenoxyd und das Farbpigment für die weiße Tinte mindestens ein Pigment, aus einer Gruppe, umfassend ein Titanweiß, ein Bleiweiß und ein Zinkweiß enthält.

4. Film für die Übertragung eines Musters unter Flüssigkeitsdruck mit einem flüssigkeitslöslichen oder in einer Flüssigkeit quellenden Basisfilm und mit einem auf dem Basisfilm aufgedruckten Muster, wobei das Muster mit einer oder mehreren Drucktinten, umfassend eine blaue Tinte, eine gelbe Tinte, eine rote Tinte, eine schwarze Tinte und eine weiße Tinte oder mit Tinten, bei denen die genannten Tinten vermischt wurden, hergestellt wurde, wobei jede der zum Drucken verwendeten Tinten **dadurch gekennzeichnet ist, dass** sie ein Harzbestandteil und ein Farbpigment enthält, dass der Harzbestandteil aus einem Fluorpolymer besteht und das Farbpigment für die gelbe Tinte mindestens eines aus einer Gruppe, umfassend ein Eisenoxyd, ein Titangelb und ein Bleichromat, das Farbpigment für die rote Tinte mindestens eines aus einer Gruppe, umfassend ein Polierrot, ein Eisenoxyd, das sich von dem Polierrot unterscheidet und ein Bleimolybdat, das Farbpigment für die blaue Tinte mindestens eines aus einer Gruppe umfassend ein Eisenblau, ein Ultramarinblau und ein Kobaltblau, das Farbpigment für die schwarze Tinte mindestens eines aus einer Gruppe, umfassend ein Rußschwarz und ein Eisenoxyd und das Farbpigment für die weiße Tinte mindestens eines aus einer Gruppe, umfassend ein Titanweiß, ein Bleiweiß und ein Zinkweiß enthält.

5. Film nach Anspruch 4, **dadurch gekennzeichnet, dass** das Fluorpolymer Vinylidenfluoridpolymer ist.

6. Gegenstand mit einem mit Flüssigkeitsdruck übertragenem Muster, der **dadurch** erzeugt wurde, dass ein Druckmuster von einem das Druckmuster übertragenden Film mit Flüssigkeitsdruck auf den zu behandelnden Gegenstand gedruckt wurde, wobei das Druckmuster **dadurch** hergestellt wurde, dass eine oder mehrere Tinten, aus einer Gruppe, umfassend eine blaue Tinte, eine gelbe Tinte, eine rote Tinte, eine schwarze Tinte und eine weiße Tinte verwendet wurden, oder dass eine oder mehrere Tinten verwendet wurden, die durch Vermischen der genannten Tinten hergestellt wurden, wobei jede der zum Druck verwendeten Tinten **dadurch gekennzeichnet ist, dass** sie ein Harzbestandteil und ein Farbpigment enthält, wobei der Harzbestandteil aus einem Fluorpolymer besteht und das Farbpigment für die gelbe Tinte mindestens eines aus einer Gruppe, umfassend ein Eisenoxyd, ein Titangelb und ein Bleichromat, das Farbpigment für die rote Tinte mindestens eines aus einer Gruppe, umfassend ein Polierrot, ein Eisenoxyd, das sich von dem Polierrot unterscheidet und ein Bleimolybdat, das Farbpigment für die blaue Tinte mindestens eines aus einer Gruppe umfassend ein Eisenblau, ein Ultramarinblau und ein Kobaltaluminat, das Farbpigment für die schwarze Tinte mindestens eines aus einer Gruppe, umfassend ein Rußschwarz und ein Eisenoxyd und das Farbpigment für die weiße Tinte mindestens eines aus einer Gruppe, umfassend ein Titanweiß, ein Bleiweiß und ein Zinkweiß ist.

7. Gegenstand nach Anspruch 6, **dadurch gekennzeichnet, dass** das Fluorpolymer ein Vinylidenfluoridpolymer ist.

8. Gegenstand nach einem der Ansprüche 6 oder 7, **dadurch gekennzeichnet, dass** der zu behandelnde Gegenstand eine Unterschicht, die unter der mittels Flüssigkeitsdruck übertragenen Musterschicht liegt und/oder eine Überzugsschicht aufweist, die auf der mittels Flüssigkeitsdruck übertragenen, Musterschicht liegt, wobei die Unterschicht und die Überzugsschicht durch eine Farbe gebildet sind, die einen Harzbestandteil aus Fluorpolymer enthält.

9. Gegenstand nach Anspruch 8, **dadurch gekennzeichnet, dass** sich eine Unterschicht auf der Oberfläche des zu behandelnden Gegenstandes befindet, auf die eine Musterschicht durch Übertragen eines Druckmusters von einem Film unter Anwendung von Flüssigkeitsdruck übertragen wurde, wobei die Unterschicht von einer Farbe erzeugt wurde, die einen Harzbestandteil aus einem Fluorpolymerharz hat, um dem zu behandelnden Gegenstand eine Grundfarbe zu geben, wobei die mit Flüssigkeitsdruck übertragene Schicht ein einfarbiges Muster aufweist, um eine vorbestimmte dekorative Oberfläche in Kombination mit der Grundfarbe herzustellen, wobei das einfarbige Muster durch eine mit Flüssigkeitsdruck das Muster übertragenden Tinte gebildet ist, die ein Harzbestandteil aus einem Fluorpolymerharz und ein anorganisches Pigment enthält, wobei das Farbpigment für eine gelbe Tinte mindestens eines, aus einer Gruppe, die ein Eisenoxyd, ein Titangelb und ein Bleichromat enthält, das Farbpigment für eine rote Tinte mindestens eines, aus einer Gruppe, die ein Polierrot, ein Eisenoxyd, das sich von dem Polierrot unterscheidet und ein Bleimolybdat enthält, das Farbpigment für eine blaue Tinte mindestens eines aus einer Gruppe, die ein Eisenblau, ein Ultramarinblau und ein Kobaltblau enthält, das Farbpigment für eine schwarze Tinte mindestens eines, aus einer Gruppe, die ein Rußschwarz und ein Eisenoxyd enthält und das Farbpigment für eine weiße Tinte mindestens eines aus einer Gruppe, die ein Titanweiß, ein Bleiweiß und ein Zinkweiß enthält, ist.

10. Gegenstand nach Anspruch 9, **dadurch gekennzeichnet, dass** das Fluorpolymer ein Vinylidenfluoridpolymer ist.

11. Verfahren zum Drucken eines Musters von einem ein zu übertragendes Muster tragenden Film auf einen zu behandelnden Gegenstand unter Flüssigkeitsdruck, wobei das Muster unter Verwendung einer oder mehrerer Tinten aus einer Gruppe, enthaltend eine blaue Tinte, eine gelbe Tinte, eine rote Tinte, eine schwarze Tinte und eine weiße Tinte oder unter Verwendung einer oder mehrerer Tinten, die durch Vermischen der genannten Tinten hergestellt wurden, gedruckt wurde, wobei jede der Farben, da durch **gekennzeichnet** ist, dass sie ein Harzbestandteil und ein Farbpigment enthält, wobei der Harzbestandteil aus einem Fluorpolymer besteht und das Farbpigment für die gelbe Tinte mindestens eines aus einer Gruppe, umfassend ein Eisenoxyd, ein Titangelb und ein Bleichromat, das Farbpigment für die rote Tinte, mindestens eines aus einer Gruppe, umfassend ein Polierrot, ein Eisenoxyd, das sich vom Polierrot unterscheidet und ein Bleimolybdat, das Farbpigment für die blaue Tinte mindestens eines aus einer Gruppe, umfassend ein Eisenblau, ein Ultramarinblau und ein Kobaltaluminat, das Farbpigment für die schwarze Tinte mindestens eines aus einer Gruppe, umfassend ein Rußschwarz und ein Eisenoxyd und das Farbpigment für die weiße Tinte mindestens eines aus einer Gruppe, umfassend ein Titanweiß, ein Bleiweiß und ein Zinkweiß umfasst, ist und dass das Druckmuster, das sich trocken auf dem das Muster übertragenden Film befindet, unter Flüssigkeitsdruck übertragen wird, nachdem es mit Hilfe eines Aktivators aktiviert wurde.

12. Verfahren nach Anspruch 11, **dadurch gekennzeichnet, dass** das Fluorpolymer ein Vinylidenfluoridpolymer ist.

13. Verfahren zum Drucken eines Musters unter Flüssigkeitsdruck von einem ein zu übertragendes Muster tragenden Film auf einen zu behandelnden Gegenstand, wobei das Muster unter Verwendung einer oder mehrerer Tinten aus einer Gruppe von Tinten, umfassend eine blaue Tinte, eine gelbe Tinte, eine rote Tinte, eine schwarze Tinte und eine weiße Tinte oder einer oder mehrerer Tinten, die durch Vermischen der genannten Tinten hergestellt wurden, erzeugt wird, wobei jede der Tinten **dadurch gekennzeichnet ist, dass** sie einen Harzbestandteil und ein Farbpigment enthält, wobei der Harzbestandteil aus einem Fluorpolymer besteht und das Farbpigment für die gelbe Tinte mindestens eines, aus einer Gruppe, umfassend ein Eisenoxyd, ein Titangelb und ein Bleichromat und das Farbpigment für die rote Tinte mindestens eines, aus einer Gruppe umfassend ein Polierrot, ein Eisenoxyd, das sich von dem Polierrot unterscheidet und ein Bleimolybdat, das Farbpigment für die blaue Tinte mindestens eines, aus einer Gruppe, umfassend ein Eisenblau, ein Ultramarinblau und ein Kobaltblau, das Farbpigment für die schwarze Tinte mindestens eines aus einer Gruppe, umfassend ein Rußschwarz und ein Eisenoxyd und das Farbpigment für die weiße Tinte, mindestens eines aus einer Gruppe, umfassend ein Titanweiß, ein Bleiweiß und ein Zinkweiß ist und dass das Druckmuster unter Flüssigkeitsdruck übertragen wird, bevor das Druckmuster auf dem das Muster übertragenden Film getrocknet ist.

14. Verfahren nach Anspruch 13, **dadurch gekennzeichnet, dass** das Fluorpolymer ein Vinylidenfluoridpolymer ist.

15. Verfahren nach Anspruch 11 und/oder 13, **dadurch gekennzeichnet, dass** auf dem zu behandelnden Gegenstand eine Unterschicht gebildet wird, aus einer Farbe, die einen Harzbestandteil aus einem Fluorpolymerharz enthält, um eine Grundfarbe auf dem zu behandelnden Gegenstand zu bilden, und dass ein einfarbiges Druckmuster durch Übertragung eines einfarbigen auf einem Übertragungsfilm befindlichen Musters unter Flüssigkeitsdruck auf die Unterschicht aufgebracht wird um eine festgelegte dekorative Oberfläche in Unterschicht aufgebracht wird um eine festgelegte dekorative Oberfläche in Kombination mit der Grundfarbe auf dem zu behandelnden Gegenstand zu erzeugen.

16. Verfahren nach Anspruch 15, **dadurch gekennzeichnet, dass** das Fluorpolymer ein Vinylidenfluoridpolymer ist.

## Revendications

1. Ensemble d'encres à report de modèle sous pression liquide comprenant au moins une encre bleue, une encre jaune et une encre rouge,
**caractérisé en ce que**
chacune de ces encres comprend un ingrédient de résine et un pigment de couleur, l'ingrédient de résine étant composé d'un fluoropolymère et le pigment de couleur pour l'encre jaune étant au moins un pigment choisi dans un groupe constitué par un oxyde de fer, un jaune titane et un chromate de plomb, le pigment de couleur pour l'encre rouge étant au moins un pigment choisi dans un groupe constitué par un rouge, un oxyde de fer différent du rouge et un molybdate de plomb, et le pigment de couleur pour l'encre bleue étant au moins un pigment choisi dans un groupe constitué par un bleu de fer, un bleu outremer et un aluminate de cobalt.

2. Ensemble d'encres à report de modèle sous pression liquide selon la revendication 1,
**caractérisé en ce que**
le fluoropolymère est un polymère de fluorure de vinylidène.

3. Ensemble d'encres à report de modèle sous pression liquide selon la revendication 1 ou 2 et comprenant en outre une encre parmi une encre blanche et une encre noire, ou les deux,
**caractérisé en ce que**
le pigment de couleur pour l'encre noire est au moins un pigment choisi dans un groupe constitué par un noir de carbone et un oxyde de fer, et le pigment de couleur pour l'encre blanche est au moins un pigment choisi dans un groupe constitué par un blanc de titane, un blanc de céruse et un blanc de zinc.

4. Film à report de modèle sous pression liquide présentant un film de base soluble dans un liquide ou gonflant dans un liquide et un modèle d'impression imprimé sur ce film de base, le modèle d'impression étant imprimé en utilisant une ou plusieurs encre(s) d'impression parmi une encre bleue, une encre jaune, une encre rouge, une encre noire et une encre blanche ou bien une encre ou des encres préparé(e)s en mélangeant ces encres d'impression,
**caractérisé en ce que**
chaque encre comprend un ingrédient de résine et un pigment de couleur, l'ingrédient de résine étant composé d'un fluoropolymère et le pigment de couleur pour l'encre jaune étant au moins un pigment choisi dans un groupe constitué par un oxyde de fer, un jaune titane et un chromate de plomb, le pigment de couleur pour l'encre rouge étant au moins un pigment choisi dans un groupe constitué par un rouge, un oxyde de fer différent du rouge et un molybdate de plomb, le pigment de couleur pour l'encre bleue étant au moins un pigment choisi dans un groupe constitué par un bleu de fer, un bleu outremer et un aluminate de cobalt, le pigment de couleur pour l'encre noire étant au moins un pigment choisi dans un groupe constitué par un noir de carbone et un oxyde de fer et le pigment de couleur pour l'encre blanche étant au moins un pigment choisi dans un groupe constitué par un blanc de titane, un blanc de céruse et un blanc de zinc.

5. Film à report de modèle sous pression liquide selon la revendication 4,
**caractérisé en ce que**
le fluoropolymère est un polymère de fluorure de vinylidène.

6. Article à modèle transféré sous pression liquide formé en transférant un modèle d'impression à partir d'un film à report de modèle sur un corps objectif au moyen d'une pression liquide, le modèle d'impression étant formé en étant imprimé en utilisant une ou plusieurs encre(s) d'impression parmi une encre bleue, une encre jaune, une encre rouge, une encre noire et une encre blanche ou bien une encre ou des encres préparé(e)s en mélangeant ces encres d'impression,
**caractérisée en ce qu'**
chaque encre comprend un ingrédient de résine et un pigment de couleur, l'ingrédient de résine étant composé d'un fluoropolymère et le pigment de couleur pour l'encre jaune étant au moins un pigment choisi dans un groupe constitué par un oxyde de fer, un jaune titane et un chromate de plomb, le pigment de couleur pour l'encre rouge étant au moins un pigment choisi dans un groupe constitué par un rouge, un oxyde de fer différent du rouge et un molybdate de plomb, le pigment de couleur pour l'encre bleue étant au moins un pigment choisi dans un groupe constitué par un bleu de fer, un bleu outremer et un aluminate de cobalt, le pigment de couleur pour l'encre noire étant au moins un pigment choisi dans un groupe constitué par un noir de carbone et un oxyde de fer, et le pigment de couleur pour l'encre blanche étant au moins un pigment choisi dans un groupe constitué par un blanc de titane, un blanc de céruse et un blanc de zinc.

7. Article à modèle transféré sous pression liquide selon la revendication 6,
**caractérisé en ce que**
le fluoropolymère est un polymère de fluorure de vinylidène.

8. Article à modèle transféré sous pression liquide selon la revendication 6 ou 7 et
**caractérisé en ce que**
le corps objectif présente une sous-couche prévue sous la couche à modèle transféré sous pression liquide ou bien une couche de finition prévue sur la couche à modèle transféré sous pression liquide, ou les deux, la sous-couche et la couche de finition étant formées par une peinture comportant un ingrédient de résine de fluoropolymère.

9. Article à modèle transféré sous pression liquide selon la revendication 8,
**caractérisé en ce qu'**
il présente une sous-couche prévue sur une surface d'un corps objectif et une couche à modèle transféré sous pression liquide formée en transférant un modèle d'impression sur la sous-couche à partir d'un film à report de modèle au moyen d'une pression liquide, la sous-couche étant formée par une peinture comportant un ingrédient d'une résine fluoropolymère pour obtenir une couleur de fond sur le corps objectif, la couche à modèle transféré sous pression liquide présentant un modèle à une couleur de manière à obtenir une surface décorative prédéterminée en combinaison avec la couleur de fond, le modèle à une couleur étant formé par une encre à report de modèle sous pression liquide comprenant un ingrédient d'une résine fluoropolymère et un pigment inorganique, le pigment de couleur pour une encre jaune étant au moins un pigment choisi dans un groupe constitué par un oxyde de fer, un jaune titane et un chromate de plomb, le pigment de couleur pour une encre rouge étant au moins un pigment choisi dans un groupe constitué par un rouge, un oxyde de fer différent du rouge et un molybdate de plomb, le pigment de couleur pour une encre bleue étant au moins un pigment choisi dans un groupe constitué par un bleu de fer, un bleu outremer et un aluminate de cobalt, le pigment de couleur pour une encre noire étant au moins un pigment choisi dans un groupe constitué par un noir de carbone et un oxyde de fer, et le pigment de couleur pour une encre blanche étant au moins un pigment choisi dans un groupe constitué par un blanc de titane, un blanc de céruse et un blanc de zinc.

10. Article à modèle transféré sous pression liquide selon la revendication 9,
**caractérisé en ce que**
le fluoropolymère est un polymère de fluorure de vinylidène.

11. Procédé de report d'un modèle d'impression à partir d'un film à report de modèle sur un corps objectif au moyen d'une pression liquide, le modèle d'impression étant formé en étant imprimé en utilisant une ou plusieurs encre(s) d'impression parmi une encre bleue, une encre jaune, une encre rouge, une encre noire et une encre blanche ou bien une encre ou des encres préparé(e)s en mélangeant ces encres d'impression,
**caractérisée en ce que**
chaque encre comprend un ingrédient de résine et un pigment de couleur, l'ingrédient de résine étant composé d'un fluoropolymère, le pigment de couleur pour l'encre jaune étant au moins un pigment choisi dans un groupe constitué par un oxyde de fer, un jaune titane et un chromate de plomb, le pigment de couleur pour l'encre rouge étant au moins un pigment choisi dans un groupe constitué par un rouge, un oxyde de fer différent du rouge et un molybdate de plomb, le pigment de couleur pour l'encre bleue étant au moins un pigment choisi dans un groupe constitué par un bleu de fer, un bleu outremer et un aluminate de cobalt, le pigment de couleur pour l'encre noire étant au moins un pigment choisi dans un groupe constitué par un noir de carbone et un oxyde de fer, et le pigment de couleur pour l'encre blanche étant au moins un pigment choisi dans un groupe constitué par un blanc de titane, un blanc de céruse et un blanc de zinc, et le modèle d'impression qui est sec sur le film à report de modèle étant transféré sous pression liquide après que le modèle d'impression ait été traité pour être activé par un activateur.

12. Procédé selon la revendication 11,
**caractérisé en ce que**
le fluoropolymère est un polymère de fluorure de vinylidène.

13. Procédé de report d'un modèle d'impression à partir d'un film à report de modèle sur un corps objectif au moyen d'une pression liquide, le modèle d'impression étant formé en étant imprimé en utilisant une ou plusieurs encre(s) d'impression parmi une encre bleue, une encre jaune, une encre rouge, une encre noire et une encre blanche ou bien une encre ou des encres préparé(e)s en mélangeant ces encres d'impression,
**caractérisée en ce que**
chaque encre comprend un ingrédient de résine et un pigment de couleur, l'ingrédient de résine étant composé d'un fluoropolymère, le pigment de couleur pour l'encre jaune étant au moins un pigment choisi dans un groupe constitué par un oxyde de fer, un jaune titane et un chromate de plomb, le pigment de couleur pour l'encre rouge étant au moins un pigment choisi dans un groupe constitué par un rouge, un oxyde de fer différent du rouge et un molybdate de plomb, le pigment de couleur pour l'encre bleue étant au moins un pigment choisi dans un groupe constitué par un bleu de fer, un bleu outremer et un aluminate de cobalt, le pigment de couleur pour l'encre noire étant au moins un pigment choisi dans un groupe constitué par un noir de carbone et un oxyde de fer, et le pigment de couleur pour l'encre blanche étant au moins un pigment choisi dans un groupe constitué par un blanc de titane, un blanc de céruse et un blanc de zinc, et le modèle d'impression étant transféré sous pression liquide avant que le modèle d'impression soit séché sur le film à report de modèle.

14. Procédé selon la revendication 13,
**caractérisé en ce que**
le fluoropolymère est un polymère de fluorure de vinylidène.

15. Procédé de report d'un modèle d'impression sur un corps objectif selon la revendication 11 et/ ou la revendication 13,
**caractérisé par**
les étapes consistant à :
- former une sous-couche sur le corps objectif par une peinture comportant un ingrédient d'une résine fluoropolymère pour obtenir une couleur de fond sur celui-ci, et
- former une couche à modèle transféré sous pression liquide d'un modèle à une couleur en transférant un modèle d'impression du modèle à une couleur sur la sous-couche à partir d'un film à report de modèle en utilisant une pression liquide de manière à obtenir une surface décorative prédéterminée sur le corps objectif en combinaison avec la couleur de fond.

16. Procédé selon la revendication 15,
**caractérisé en ce que**
le fluoropolymère est un polymère de fluorure de vinylidène.
